# EUROPÄISCHE PATENTSCHRIFT

(11) **EP 3 126 732 B1**
(45) Veröffentlichungstag und Bekanntmachung des Hinweises auf die Patenterteilung: **20.06.2018**
(21) Anmeldenummer: 15723821.3
(22) Anmeldetag: 03.04.2015
(51) Int. Cl.: F16M 11/42, A63H 19/30

(54) **SCHIENENSYSTEM FÜR EINE KAMERA**
RAIL SYSTEM FOR A CAMERA
SYSTÈME DE RAILS POUR CAMÉRA

(30) Priorität: 04.04.2014 AT 2532014
(43) Veröffentlichungstag der Anmeldung: 08.02.2017
(73) Patentinhaber: Centurioni, Patrick, 6020 Innsbruck (AT)
(72) Erfinder: STEGER, Martin, 6020 Innsbruck (AT)
(74) Vertreter: Torggler & Hofinger Patentanwälte
(86) Internationale Anmeldenummer: PCT/AT2015/000053
(87) Internationale Veröffentlichungsnummer: WO 2015/149093

(56) Entgegenhaltungen:
- US-A- 3 680 777
- US-A- 4 943 821
- US-A- 5 794 846

## Beschreibung

Die Erfindung betrifft ein Schienensystem für eine Kamera nach dem Oberbegriff des Anspruchs 1.

Derartige Schienensysteme sind bereits Stand der Technik und werden beispielsweise in der US 6,523,957, in der US 3,680,777 gezeigt. Kameraführungen auf Schienensystemen haben sich in den letzten Jahren zu einem äußerst beliebten Hilfsmittel in der Film- und Fotoindustrie entwickelt. Der hohe Einsatzbereich für Produkt- und Werbefilme ist ebenso gestiegen wie der Einsatz im Naturfilm. Hier ist vor allem die Verwendung von Kameraführungen (Schienensysteme, Slidern) bei den populären Timelapse-Videos (Zeitrafferaufnahmen) zu nennen. Es gibt diverse Produkte auf dem Markt, welche einen Kameraschlitten auf einem linearen Schienensystem führen. Schienensysteme mit denen man entlang einer Kurve fahren kann sind eher gering und aufgrund der starren Bauweise nur begrenzt für spezielle Motive einsetzbar.

Schienensysteme für Kameras haben den Nachteil, dass diese in ihrer Flexibilität sehr eingeschränkt sind. Die Schienen sind starr ausgeführt und lassen sich nicht an die Umgebung anpassen. Möchte man beispielsweise ein Objekt mit einer Kamera ablichten und die Kamera in einer kreisrunden Bahn um das Objekt bewegen, kann die kreisrunde Bahn in ihrem Radius nicht ohne weiteres an die Größe des Objektes angepasst werden. Ist das Objekt z.B. klein, ist ein engerer Kreis vorteilhaft, bei einem großen Objekt ein größerer Kreis. Weiters erweisen sich Schienen als sperrig, ein Transport der sperrigen Schienensysteme erweist sich als äußerst kompliziert. Der Aufbau der Schienensysteme ist ebenfalls als sehr komplex anzusehen. Oftmals weisen die aus mehreren Einzelteilen bestehenden Schienensysteme eine geringe Stabilität auf. Lineare Führungssysteme können nur für lineare Bewegungen verwendet werden und nicht für eine Bewegung eines Kameraschlittens z.B. in einem Kreisbogen. Auch umgekehrt ist es nicht möglich, eine in Kurven geformte Kameraführungsschiene für eine lineare Verfahrensweise an der Kamera zu verwenden.

Aufgabe der Erfindung ist es, die vorbeschriebenen Nachteile zu vermeiden und ein gegenüber dem Stand der Technik verbessertes Schienensystem anzugeben.

Dies wird beim erfindungsgemäßen Schienensystem durch die Merkmale des Anspruchs 1 erreicht. Wenn die Segmente mit der zumindest einen Führungsschiene in Verbindung stehen, kann die Anordnung der einzelnen Segmente in ihrer Form verändert und die Führungsschiene angepasst werden.

Als besonders vorteilhaft hat es sich dabei herausgestellt, dass zwei flexible Führungsschienen entlang der Trägerstruktur ausgebildet sind, wobei sich die Trägerstruktur zwischen den flexiblen Führungsschienen befindet. Durch die Trägerstruktur wird eine hohe Stabilität des Schienensystems gewährleistet, die daran angeordneten flexiblen Führungsschienen lassen sich mit der in sich beweglichen Trägerstruktur in ihrer Form verändern.

Wenn die zumindest eine Führungsschiene relativ zur Trägerstruktur beweglich - vorzugsweise verschiebbar - gelagert ist, wird die Führungsschiene nicht durch das Verändern der Geometrie der Trägerstruktur gestaucht oder gestreckt. Wird die Trägerstruktur beispielsweise in einem Kreisbogen gebogen, so kann die sich die innere Führungsschiene durch ihre verschiebbare Lagerung frei entlang der Trägerstruktur bewegen. Die äußere Führungsschiene wird dabei nicht gestreckt, sondern kann sich ebenfalls frei entlang der Trägerstruktur bewegen.

Als besonders vorteilhaft hat es sich dabei herausgestellt, dass eine Arretiervorrichtung zum Hemmen der relativen Beweglichkeit zwischen der zumindest einen Führungsschiene und der Trägerstruktur vorgesehen ist. Durch das Aktivieren der Arretiervorrichtung wird das Schienensystem in sich in der Form gesperrt. Wird das Schienensystem beispielsweise in einem Kreisbogen verformt und im Anschluss durch die Arretiervorrichtung blockiert, so verharrt diese in der Kreisform. Wird die Arretiervorrichtung geöffnet, kann das Schienensystem wieder in eine lineare Form gebracht werden und dient als lineares Kameraführungssystem.

Wenn das Schienensystem ein Endstück aufweist, wobei die zumindest eine Führungsschiene beweglich - vorzugsweise verschiebbar - im Endstück gelagert ist, so sind die Enden der Führungsschiene im Endstück verstaut. Die Führungsschienen bleiben nach der Biegung des Schienensystems in der Struktur des Endstücks und ragen nicht darüber hinaus.

Wenn eine Arretiervorrichtung im Endstück angeordnet ist, ist diese leicht erreichbar, behindert die Bewegung des Kameraschlittens nicht und das Schienensystem kann an dieser gut zugänglichen Stelle arretiert oder geöffnet werden, um die Form des Schienensystems zu ändern oder zu erhalten.

Wenn die mehreren Segmente durch Achsen miteinander verbunden sind, lässt sich das Schienensystem einfach in seiner Form verändern und aus einer linearen Struktur eine kurvige Struktur herstellen.

Als besonders vorteilhaft hat es sich dabei herausgestellt, dass die zumindest eine Führungsschiene aus einem flexiblen Kunststoff, einer Kunststoffverbindung und/oder einem flexiblen Metall ausgebildet ist. Durch die leichte Verformbarkeit dieser Materialien ist eine einfache Formgestaltung des Schienensystems gewährleistet. Zusätzlich weist ein Kunststoff - vor allem in flexibler Ausführung - dämpfende Eigenschaften auf, wenn die Rollen des Kameraschlittens darauf verfahren. Es entstehen keine störenden Geräusche beim Abrollen des Kameraschlittens und die Vibrationen, die durch Unebenheiten auf der Schiene entstehen, werden dabei auf ein Mindestmaß reduziert.

Da der Kameraschlitten mit Roll- und/oder Gleitlagern versehenen Rollen an der zumindest einen Führungsschiene gelagert ist, wird das Verfahren des Kameraschlittens vereinfacht und die Rollreibung reduziert. Weiters entstehen beim Abrollen keine Geräusche durch beispielsweise eine schlecht gelagerte Rolle, welche beim Filmen sehr störend wären.

Wenn die Drehachsen der Rollen in einer Horizontalebene und/oder von der Horizontalebene abweichenden Winkel am Kameraschlitten und/oder der zumindest einen Führungsschiene angeordnet sind, ist es möglich den Kameraschlitten stabil zu lagern. Ein Umkippen des Kameraschlittens oder Herabfallen vom Schienensystem wird somit verhindert. Dies wird auch durch die zumindest eine Führungsschiene mit einem T-förmigen Querschnitt unterstützt. Hintergreift beispielsweise eine der Rollen am Kameraschlitten den Überhang des T-förmigen Querschnitts, so wird ein Herunterkippen des Kameraschlittens von der Führungsschiene verhindert.

Wenn der Kameraschlitten durch eine Antriebseinheit - vorzugsweise ein Elektromotor - auf dem Schienensystem verfahrbar ist, so können automatisch Bewegungen auf dem Schienensystem abgefahren werden. Das Bewegen des Kameraschlittens auf dem Schienensystem kann somit zeitlich an die Filmsequenz angepasst werden, was bei speziellen Filmeffekten sehr vorteilhaft ist.

Weitere vorteilhafte Ausführungsformen sind in den abhängigen Unteransprüchen definiert.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1a, 1b: Schienensystem in Schrägansicht mit einem Segment,
- Fig. 2: Schienensystem in Draufsicht mit Kameraschlitten,
- Fig. 3: Trägerstruktur in Seitenansicht,
- Fig. 4: Schienensystem in Schrägansicht,
- Fig. 5: Schienensystem mit Zugelement,
- Fig. 6: Arretiervorrichtung mit Aktuator,
- Fig. 7a bis 7c: verschiedene Krümmungsradien im Schienensystem,
- Fig. 8: Seitenansicht schematische Darstellung Kameraschlitten, Kamera und Führungsschiene,
- Fig. 9: Schnittdarstellung Schienensystem und Kameraschlitten,
- Fig. 10: Draufsicht Schienensystem,
- Fig. 11: Detailansicht Einlage,
- Fig. 12: Schienensystem gekrümmt,
- Fig. 13: Schienensystem Schnittdarstellung,
- Fig. 14: Führungsschiene in Einlage,
- Fig. 15: Kameraschlitten auf Führungsschiene schematisch,
- Fig. 16: Schienensystem mit Kameraschlitten Unteransicht

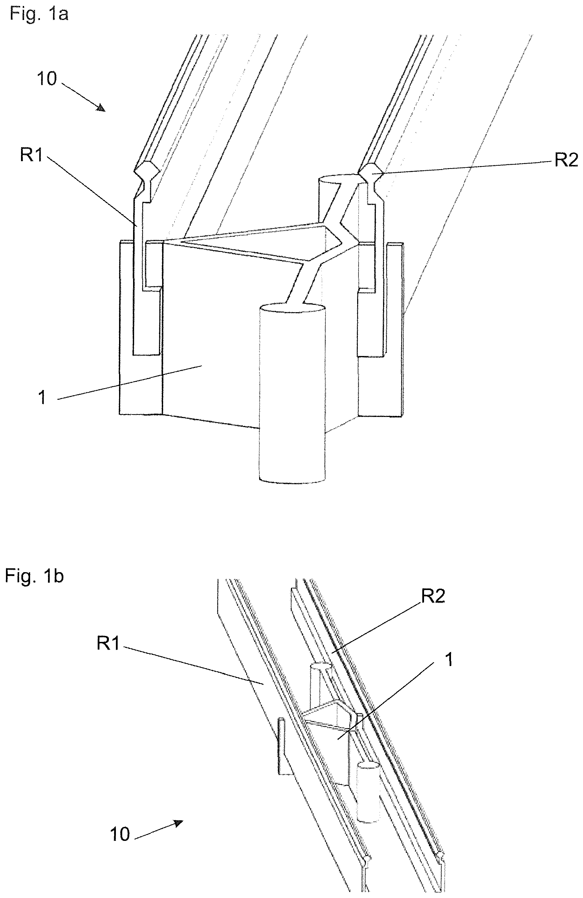

Figur 1a zeigt ein Segment 1 eines Schienensystems 10 mit einer Führungsschiene R1 und einer Führungsschiene R2. Die tragende Struktur der Segmente 1 befindet sich zwischen den Führungsschienen R1, R2.

Figur 1b zeigt das Schienensystem 10 aus einem etwas anderen Blickwinkel wie in der Figur 1a. Die Führungsschienen R1, R2 sind längsbeweglich - verschiebbar - in den einzelnen Segmenten 1 gelagert.

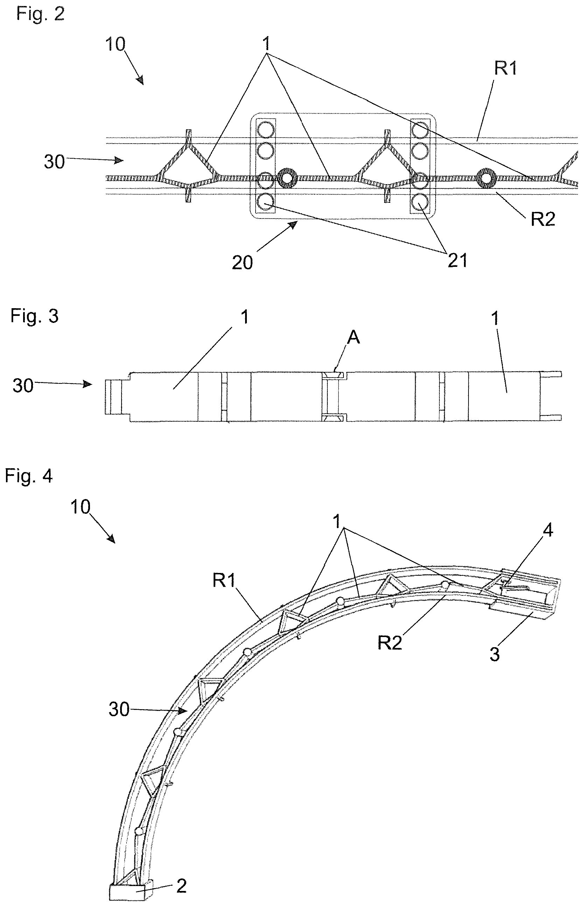

Figur 2 zeigt ein Schienensystem 10 in der Draufsicht mit einem Kameraschlitten 20, der über Rollen 21 auf den Führungsschienen R1, R2 verfahrbar gelagert ist. Die Führungsschienen R1, R2 befinden sich verschiebbar gelagert an der Trägerstruktur 30 und lassen sich entlang dieser bewegen. Die Trägerstruktur 30 besteht aus mehreren einzelnen Segmenten 1, welche über drehbare Verbindungselemente, beispielsweise Achsen A, miteinander verbunden sind.

Figur 3 zeigt eine Trägerstruktur 30, in der Seitenansicht. Die einzelnen Segmente 1 sind durch Achsen A miteinander verbunden. Die Segmente 1 können sich um die Achse drehbar bewegen.

Figur 4 zeigt ein Schienensystem 10 mit einer Trägerstruktur 30, auf welcher die Führungsschienen R1, R2 längsbeweglich gelagert sind. Die Führungsschienen R1, R2 sind zueinander beabstandet über das Verbindungsstück 2 miteinander fest verbunden. Das Verbindungsstück 2 ist ebenfalls mit der Trägerstruktur 30 fest verbunden. Am anderen Ende des Schienensystems 10 befindet sich das Endstück 3. Die Führungsschienen R1, R2 sind beweglich im Endstück 3 gelagert. Die Trägerstruktur 30 ist fest mit dem Endstück 3 verbunden.

Wird das Schienensystem 10 gebogen wie in der Fig. 4 dargestellt, wird die innere Führungsschiene R2 gestaucht. Die Stauchung wird durch die im Endstück 3 befindliche Führung kompensiert - die Führungsschiene kann sich entlang der in dem Endstück 3 befindlichen Führung bis zu einem Anschlag frei bewegen. Die äußere Führungsschiene R1 wird beim in der Figur 4 gezeigten Kreisbogen gestreckt. Die Streckung wird ebenfalls durch eine Führung im Endstück 3 kompensiert - durch einen Anschlag am Endstück 3 und/oder der Führungsschiene R1 wird verhindert, dass die Führungsschiene R1 vollständig aus dem Endstück 3 herausgezogen werden kann. Ist der zu erreichende Biegeradius eingestellt, kann über die Arretiervorrichtung 4 das Schienensystem gesperrt werden und verharrt somit in der zuletzt gewünschten Position.

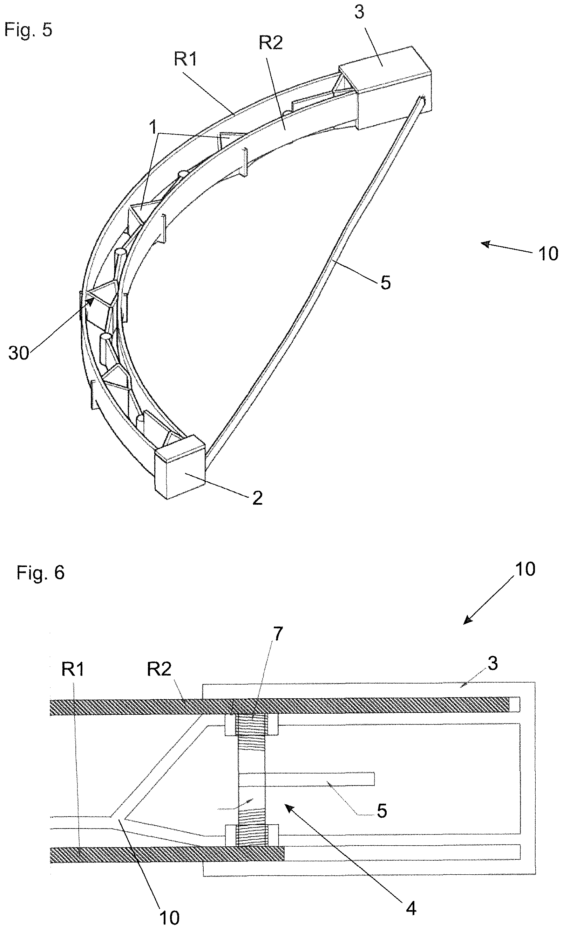

Figur 5 zeigt ein weiteres Ausführungsbeispiel des Schienensystems 10. Bei diesem wird nicht über eine Arretiervorrichtung 4 (in Figur 5 nicht ersichtlich) der Kreisbogen in seiner Form gehalten - durch das Zugelement 5, dessen Länge einstellbar ist, kann der gewünschte Radius an dem Schienensystem 10 eingestellt werden. Dabei wird, wie auch in der Figur 4, die Trägerstruktur 30, die sich aus einzelnen Segmenten 1 zusammensetzt, gebogen. Die Führschienen R1 und R2 passen sich aufgrund ihrer Längsbeweglichkeit relativ zur Trägerstruktur 30 an den gewünschten Kreisbogen an. Die losen Enden der Führungsschienen R1, R2 münden im Endstück 3 und sind darin längsbeweglich gelagert.

Figur 6 zeigt die Arretiervorrichtung 4 im Endstück 3 des Schienensystems 10. In diesem Ausführungsbeispiel wird gezeigt, wie über einen Aktuator 6 eine Spindel 7 bewegt wird, welche an beiden Enden ein Gewinde aufweist und somit gegen die Führungsschienen R1, R2 gepresst wird. Durch das Anpressen der Arretiervorrichtung der Führungsschienen R1, R2 an den Korpus des Endstücks 3 werden die Führungsschienen R1, R2 in ihrer Beweglichkeit gehemmt.

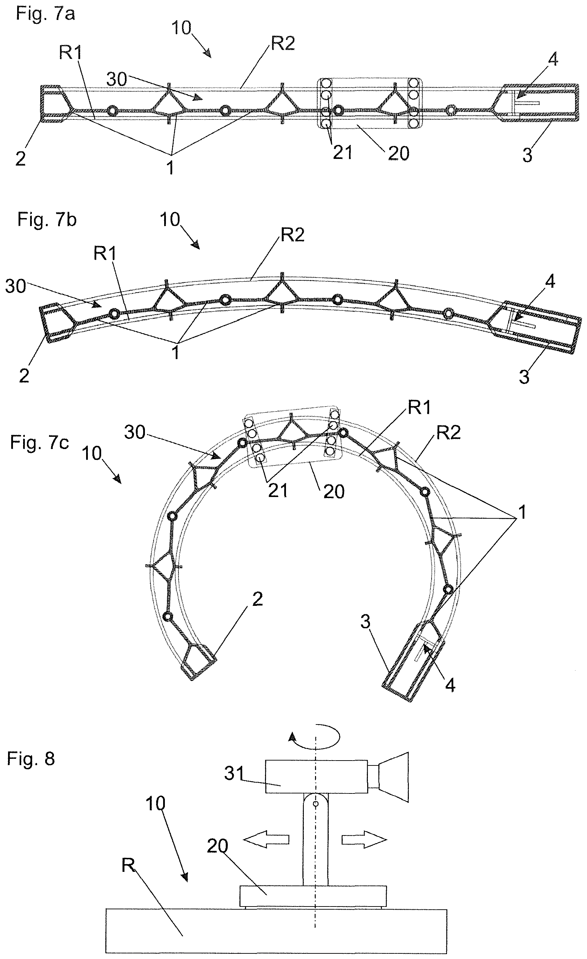

Die Figuren 7 zeigen ein Schienensystem 10 in gestreckter Form. Der Kameraschlitten 20 kann entlang des Schienensystems 10 linear verfahren. Die längsgestreckte Form, welche in der Figur 7a dargestellt wird, kann auch über die Arretiervorrichtung 4 beibehalten werden. Sollte diese geändert werden, wird die Arretiervorrichtung 4 gelöst und das Schienensystem 10 in seine gewünschte Form gebracht, wie es in der Figur 7b ersichtlich ist.

Figur 7b zeigt eine leicht gekrümmte Form des Schienensystems 10, die Führungsschiene R1 kann sich entlang des Endstücks 3 bewegen, ist jedoch in den einzelnen Segmenten 1 und auch dem Endstück 3 längsbeweglich gelagert. Dies gilt auch für die Führungsschiene R2, die bereits bei dieser leichten Krümmung gestreckt wird. Ein Teil der Führungsschiene R2 wird dabei aus ihrer Position im Endstück 3 herausbewegt. Sollte diese Form beibehalten werden, wird über die Arretiervorrichtung 4 das System in der gewünschten Form gesperrt.

Figur 7c zeigt einen stark ausgeprägten Kreisbogen des Schienensystems 10. Im Endstück 3 wurde die Führungsschiene R1 bis zum Anschlag eingeschoben, die äußere Führungsschiene R2 wurde bis zum Anschlag aus dem Endstück 3 herausgezogen. Der Kameraschlitten 20 kann entlang der Kreisbahn über die Rollen 21 bewegt werden. Sollte die Form beibehalten werden, wird über die Arretiervorrichtung das Schienensystem 10 gesperrt. Diese Form könnte jedoch auch, wie in der Figur 5 dargestellt, über die Zugvorrichtung 5 (in Figur 7c nicht dargestellt) gehalten werden.

Figur 8 zeigt eine Kamera 31 auf einem verfahrbaren Kameraschlitten 20, der über Rollen 21 (in Figur 8 nicht ersichtlich) auf zumindest einer Führungsschiene R gelagert ist.

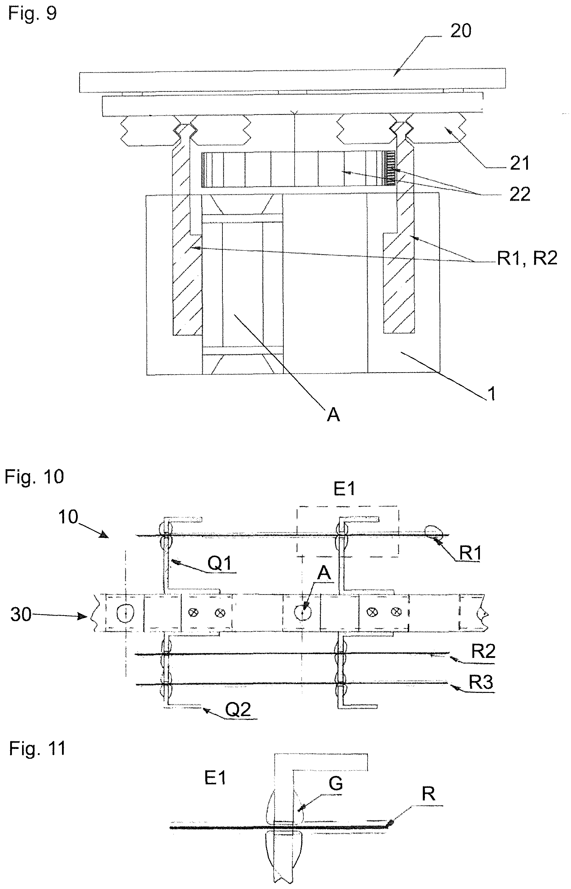

Figur 9 zeigt eine Schnittdarstellung des Schienensystems 10. Die Rollen 21 sind dabei so ausgeformt, dass sie einen Formschluss mit den Führungsschienen R1, R2 eingehen. Ein Abkippen der Kamera oder des Kameraschlittens 20 wird somit verhindert. Weiters wird eine Antriebseinheit 22 gezeigt, welche den Kameraschlitten 20 entlang der Führungsschienen R1, R2 bewegt. Die Bewegung des Kameraschlittens 20 kann dabei über eine Steuereinrichtung oder manuell erfolgen. Die Antriebseinheit kann beispielsweise über einen Riementrieb, einen Kettentrieb oder auch über zumindest eine Reibscheibe erfolgen, welche mit einer der Führungsschienen R kontaktiert und durch einen am Kameraschlitten 20 befestigten Motor angetrieben werden.

Figur 10 zeigt die Trägerstruktur 30 eines Schienensystems 10. Die Führungsschienen R1, R2, R3 sind dabei längsbeweglich an der Trägerstruktur 30 angeordnet.

Figur 11 zeigt ein Detail aus der Figur 10. Dieses bezieht sich auf den Bereich E1. Das Detail zeigt die Einlage G, welche beispielsweise aus Kunststoff wie Teflon oder einem anderen gleitfähigen Material besteht. Diese Einlage G erleichtert das Verschieben der Führungsschiene R in Relation zur Trägerstruktur 30. Die Trägerstruktur 30, welche durch einzelne Segmente 1 hergestellt wird, die über die Achsen A miteinander verbunden sind, weist Seitenvorrichtungen Q1, Q2 auf. In diesen Seitenvorrichtungen Q1, Q2 befinden sich die Einlagen G, welche das Verschieben der Führungsschienen R1, R2, R2 erleichtern.

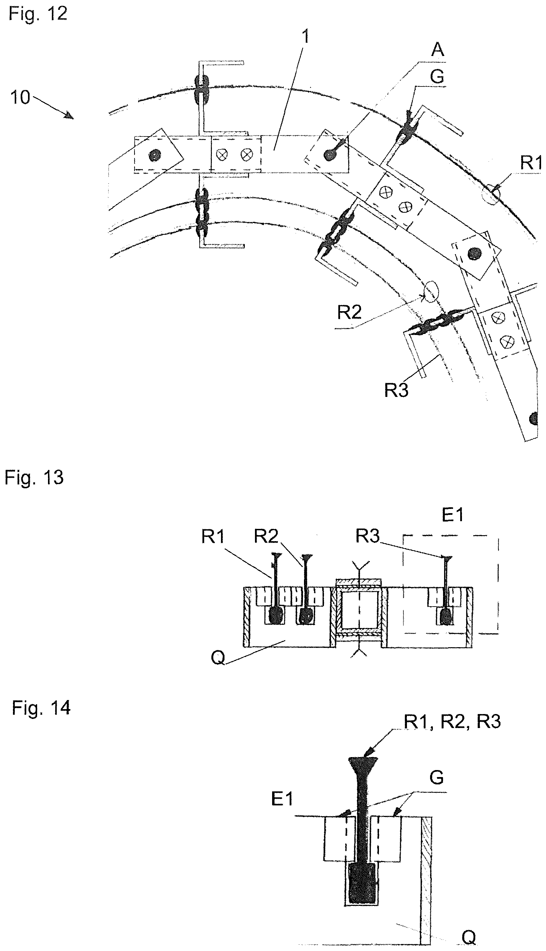

Figur 12 zeigt erneut eine stark gekrümmte Kreisbahn des Schienensystems 10. Die einzelnen Segmente 1 sind über die Achsen A miteinander verbunden. Die Streckung und Stauchung an den Führungsschienen R1, R2, R3 wird durch ihre Längsbeweglichkeit relativ zur Trägerstruktur 30 und zu deren einzelnen Segmenten 1 kompensiert.

Figur 13 zeigt eine Schnittdarstellung eines Ausführungsbeispiels. Die Seitenvorrichtungen Q der einzelnen Strukturen weisen Ausnehmungen zur Aufnahme der Führungsschienen R1, R2, R3 auf. Der Bereich E1 wird in der Figur 14 detailliert gezeigt.

Figur 14 zeigt die Einlagen G im Bereich E1, welche ein leichtes Verschieben der Führungsschienen R1, R2, R3 gewährleisten.

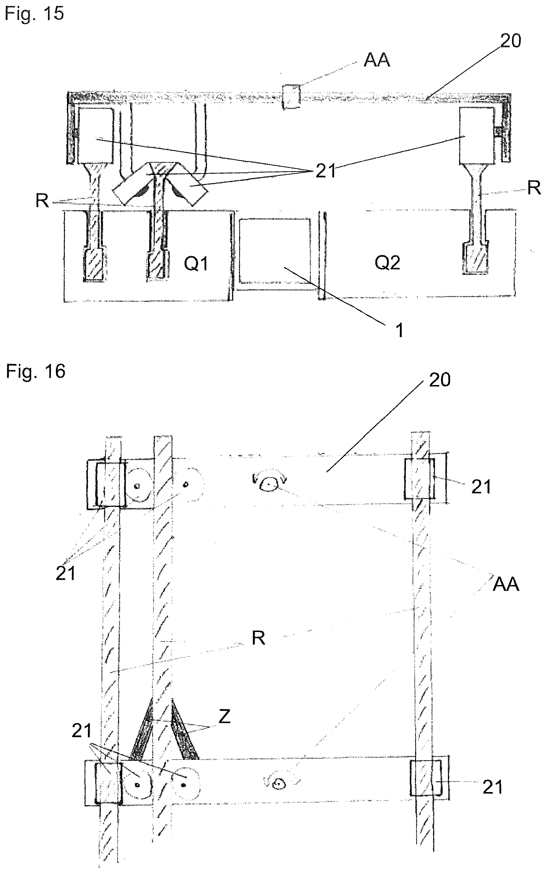

Figur 15 zeigt ein weiteres Ausführungsbeispiel eines Schienensystems 10. Die Rollen 21 sind dabei so angeordnet, dass der Kameraschlitten 20 nicht von Führungsschienen R herabfallen kann. Am Kameraschlitten 20 befindet sich ein Kameraaufnahmeelement AA. Die Führungsschienen R sind beweglich in den Seitenvorrichtungen Q1, Q2 befestigt, welche durch die Segmente 1 der Trägerstruktur 30 ausgebildet sind.

Figur 16 zeigt die Führungsschienen R in Unteransicht mit einem darauf verfahrbaren Kameraschlitten 20, der über Rollen 21 mit den Schienen R in Verbindung steht. Die Führung Z verhindert dabei ein unkontrolliertes Verschwenken des Kameraschlittens 20 in Relation zu den Führungsschienen R.

## Patentansprüche

1. Schienensystem (10) mit zumindest einer Führungsschiene (R), auf der ein eine Kamera (31) tragender Kameraschlitten (20) verfahrbar gelagert ist, **dadurch gekennzeichnet, dass** entlang der zumindest einen Führungsschiene (R) eine aus mehreren gelenkig untereinander verbundenen Segmenten (1) bestehende Trägerstruktur (30) ausgebildet ist, wobei die Segmente (1) mit der zumindest einen Führungsschiene (R) in Verbindung stehen.

2. Schienensystem nach Anspruch 1, **dadurch gekennzeichnet, dass** zwei flexible Führungsschienen (R1, R2) entlang der Trägerstruktur (30) ausgebildet sind, wobei sich die Trägerstruktur (30) zwischen den flexiblen Führungsschienen (R1, R2) befindet.

3. Schienensystem nach einem der Ansprüche 1 oder 2, **dadurch gekennzeichnet, dass** die zumindest eine Führungsschiene (R) relativ zur Trägerstruktur (30) beweglich, - vorzugsweise verschiebbar - gelagert ist.

4. Schienensystem nach Anspruch 3, **dadurch gekennzeichnet, dass** eine Arretiervorrichtung (4) zum Hemmen der relativen Beweglichkeit zwischen der zumindest einen Führungsschiene (R) und der Trägerstruktur (30) vorgesehen ist.

5. Schienensystem nach einem der Ansprüche 1 bis 4, **dadurch gekennzeichnet, dass** das Schienensystem (10) ein Endstück (3) aufweist, wobei die zumindest eine Führungsschiene (R) beweglich - vorzugsweise verschiebbar - im Endstück (3) gelagert ist.

6. Schienensystem nach einem der Ansprüche 4 oder 5, **dadurch gekennzeichnet, dass** die Arretiervorrichtung (4) im Endstück (3) angeordnet ist.

7. Schienensystem nach einem der Ansprüche 1 bis 6, **dadurch gekennzeichnet, dass** die mehreren Segmente (1) durch Achsen (A) miteinander verbunden sind.

8. Schienensystem nach einem der Ansprüche 1 bis 7, **dadurch gekennzeichnet, dass** die zumindest eine Führungsschiene (R) aus einem flexiblen Kunststoff, einer Kunststoffverbindung und/oder einem flexiblen Metall ausgebildet ist.

9. Schienensystem nach einem der Ansprüche 1 bis 8, **dadurch gekennzeichnet, dass** der Kameraschlitten (20) auf mit Roll und/oder Gleitlagern versehenen Rollen (21) an der zumindest einen Führungsschiene (R) gelagert ist.

10. Schienensystem nach Anspruch 9, **dadurch gekennzeichnet, dass** die Drehachsen der Rollen (21) in einer Horizontalebene und/oder von der Horizontalebene abweichenden Winkel am Kameraschlitten (20) und/oder der zumindest einen Führungsschiene (R) angeordnet sind.

11. Schienensystem nach einem der Ansprüche 1 bis 10, **dadurch gekennzeichnet, dass** der Kameraschlitten (20) durch eine Antriebseinheit (22) - vorzugsweise einen Elektromotor - auf dem Schienensystem (10) verfahrbar ist.

## Claims

1. A rail system (10) including at least one guide rail (R) on which a camera slider (20), to which a camera (31) is mounted, is displaceably arranged, **characterized in that** a carrier structure (30) with a plurality of hingedly interconnected segments (1) is provided along the at least one guide rail (R), wherein the segments (1) are in connected relationship with the at least one guide rail (R).

2. The guide rail according to claim 1, **characterized in that** two flexible guide rails (R1, R2) are provided along the carrier structure (30), wherein the carrier structure (30) is disposed between the flexible guide rails (R1, R2).

3. The rail system according to claim 1 or 2, **characterized in that** the at least one guide rail (R) is mounted movably - preferably slidably - relative to the carrier structure (30).

4. The rail system according to claim 3, **characterized in that** there is provided an arresting device (4) for restraining the relative movability between the at least one guide rail (R) and the carrier structure (30).

5. The rail system according to one of the claims 1 to 4, **characterized in that** the rail system (10) has an end portion (3), wherein the at least one guide rail (R) is mounted movably - preferably slidably - in the end portion (3).

6. The rail system according to one of the claims 4 or 5, **characterized in that** the arresting device (4) is located in the end portion (3).

7. The rail system according to one of the claims 1 to 6, **characterized in that** the plurality of segments (1) are connected to one another by axis members (A).

8. The rail system according to one of the claims 1 to 7, **characterized in that** the at least one guide rail (R) is formed from a flexible plastic, a plastic compound and/or a flexible metal.

9. The rail system according to one of the claims 1 to 8, **characterized in that** the camera slider (20) is mounted on rollers (21) provided with rolling and/or sliding bearings on the at least one guide rail (R).

10. The rail system according to claim 9, **characterized in that** the axes of rotation of the rollers (21) are arranged in a horizontal plane and/or at an angle differing from the horizontal plane on the camera slider (20) and/or on the at least one guide rail (R).

11. The rail system according to one of the claims 1 to 10, **characterized in that** the camera slider (20) is displaceable on the rail system (10) by a drive unit (22) - preferably an electric motor.

## Revendications

1. Système de rails (10) avec tout au moins un rail de guidage (R), sur lequel un chariot de caméra (20) qui supporte une caméra (31) est monté de manière à pouvoir se déplacer, **caractérisé en ce qu'**une structure de support (30) est conçue le long du tout au moins un rail de guidage (R), laquelle est composée de plusieurs segments (1) reliés entre eux de manière articulée ;
selon lequel les segments (1) sont en liaison avec le tout au moins un rail de guidage (R).

2. Système de rails selon la revendication 1, **caractérisé en ce que** deux rails de guidage (R1, R2) flexibles sont conçus le long de la structure de support (30), selon lequel la structure de support (30) est située entre les rails de guidage (R1, R2) flexibles.

3. Système de rails selon l'une des revendications 1 ou 2, **caractérisé en ce que** le tout au moins un rail de guidage (R) est positionné de manière mobile, de préférence de manière à pouvoir coulisser, par rapport à la structure de support (30).

4. Système de rails selon la revendication 3, **caractérisé en ce qu'**un dispositif de blocage (4) est prévu, lequel est destiné à l'entrave de la mobilité relative entre le tout au moins un rail de guidage (R) et la structure de support (30).

5. Système de rails selon l'une des revendications 1 à 4, **caractérisé en ce que** le système de rails (10) présente un embout (3), selon lequel le tout au moins un rail de guidage (R) est positionné de manière mobile, de préférence de manière à pouvoir coulisser, dans l'embout (3).

6. Système de rails selon l'une des revendications 4 ou 5, **caractérisé en ce que** le dispositif de blocage (4) est disposé dans l'embout (3).

7. Système de rails selon l'une des revendications 1 à 6, **caractérisé en ce que** les plusieurs segments (1) sont reliés les uns aux autres par des essieux (A).

8. Système de rails selon l'une des revendications 1 à 7, **caractérisé en ce que** le tout au moins un rail de guidage (R) est conçu à partir d'une matière plastique flexible, d'un composite en plastique et/ou d'un métal flexible.

9. Système de rails selon l'une des revendications 1 à 8, **caractérisé en ce que** le chariot de caméra (20) est positionné au niveau du tout au moins un rail de guidage (R), sur des rouleaux (21) qui sont pourvus de galets et/ou de paliers coulissants.

10. Système de rails selon la revendication 9, **caractérisé en ce que** les essieux rotatifs des rouleaux (21) sont disposés dans un plan horizontal et/ou au niveau du chariot de caméra (20), dans un angle qui diverge du plan horizontal et/ou au niveau du tout au moins un rail de guidage (R).

11. Système de rails selon l'une des revendications 1 à 10, **caractérisé en ce que** le chariot de caméra (20) peut être déplacé par l'intermédiaire d'une unité d'entraînement (22), de préférence un moteur électrique, sur le système de rails (10).
